# EUROPEAN PATENT SPECIFICATION

(11) **EP 0 564 218 B1**
(45) Date of publication and mention of the grant of the patent: **22.05.1996**
(21) Application number: 93302438.2
(22) Date of filing: 29.03.1993
(51) Int. Cl.: G01C 15/00, E04F 15/024

(54) **Strut height adjusting apparatus**
Stützenhöheneinstellungsvorrichtung
Dispositif d'ajustage de la hauteur d'un support

(30) Priority: 30.03.1992 JP 103618/92
(43) Date of publication of application: 06.10.1993
(73) Proprietor: SUMITOMO RUBBER INDUSTRIES LIMITED, Chuo-ku Kobe-shi Hyogo 651 (JP)
(72) Inventor: Okaniwa, Masuzo, Osaka-shi, Osaka (JP); Kishimoto, Masanobu, Yukuhashi-shi, Fukuoka (JP); Ohyama, Fumihiro, Osaka-shi (JP); Jibiki, Katsutoshi, Kitakyushu-shi, Fukuoka (JP)
(74) Representative: Stewart, Charles Geoffrey

(56) References cited:
- GB-A- 1 393 541
- US-A- 4 240 208
- PATENT ABSTRACTS OF JAPAN vol. 14, no. 514 (M-1046) 13 November 1990 & JP-A-22 13 559

## Description

The present invention relates to an apparatus for adjusting the height of a strut for supporting a member to be supported at predetermined height. More particularly it relates to improvements in such a strut height adjusting apparatus designed to allow automatic adjustment of the height thereof in proportion to a difference in level on the side of the strut height adjusting apparatus according to a signal transmitted to indicate a reference level and also capable of measuring the difference in height at a plurality of measuring points.

With the development of office automation (OA) equipment, a number of types of electric and electronic equipment have come to be used in business offices and this has resulted in the need for cable connectors to connect socket plugs as inlets for a number of power supplies for such electronic equipment. Today, it is common to construct double-bottomed office floors with connection ducts set therein so that socket plugs and cable connectors may be positioned on the floors close to the equipment installed.

Such a double-bottomed office floor is constructed by covering the floor with a plurality of floor panels at a fixed height on a base floor. The panel is commonly a square, for example of 30 ^{~} 50 cm each side and 15 ^{~} 50 mm thick, comprising a panel base material made of glass fibre reinforced concrete called GRC, calcium silicate or the like, a steel plate as a liner added to the underside of the panel base material and a carpet tile or a tile of vinyl chloride as a surface layer. Each floor panel is supported by a strut to support its corner together with the corner of another adjoining floor panel at a fixed height. The outer periphery of the strut is threaded and a support member such as a nut whose central portion meshes with the threads is provided. The height of the floor panel is adjusted by turning the support member. After all the support members are positioned at the same level, a pedestal is fitted to the strut in such a way that its lower end abuts against the support member and the corner of the floor panel together with the corner of another floor panel adjacent thereto is mounted on the pedestal to cover the floor with the floor panels at the desired uniform level.

Another method of constructing a double-bottomed floor comprises the steps of forming a notch in each corner of a floor panel, the notch being large enough for at least a quarter of a strut to be received thereby, securing a nut to locate a threaded hole at the notch beforehand, fitting the strut in the nut and installing the combination of them on a base material, arranging a floor panel without such a nut next to the panel with the nut for common use in supporting the floor panel without the nut, and adjusting the height of the nut by turning the strut. This method of construction is advantageous in that even after the floor has completely been covered with the floor panels, a level adjustment can be made by inserting a tool such as a screwdriver through the notches in the corners of the floor panels and turning the struts. The diameter of the strut is about 10 mm at the utmost and because a decorative surface material such as a carpet or glazed vinyl chloride tiles can be spread on the floor panels thus laid, the openings for the struts are covered therewith.

The practice common to the aforementioned two methods of laying floor panels is to ink meshes (normally 450 ^{~} 500 mm meshes) matching the size of the floor panel on the base material in order to install struts at the intersection points of the ink lines. Moreover, it is necessary to make uniform the height of all the struts, that is, the support members in the same plane.

The conventional method of covering a floor with floor panels includes, in order to make the height of all the struts uniform in the same plane, providing a reference strut for every 10 ^{~} 20 struts, and adjusting the height of these struts using a measuring level and a graduated rod called a staff to adjust the support members of the remaining struts existing between the reference struts to the same height of the reference strut by stretching a snapping line between the support members of the reference struts. For this conventional method, however, at least two skilled persons are required to make height adjustments by means of the levels and the staffs, and there are often problems as they may suffer from backache as they have to bend down while doing the work.

In the field of construction, on the other hand, the Spectra Physics Company of the United States has put on the market an automatic level control apparatus comprising two devices under the trade names of "Electronic Level EL - 1" (hereinafter called "EL - 1") and "Level Eye 1077" (hereinafter called "Level Eye"). This apparatus is equipped with a laser emission unit to emit a laser beam at a desired preset level and is designed, on receiving a laser beam from a laser emission unit, to produce a signal which varies with the vertical movement of the position of the beam received and to display a difference in level. More specifically, EL - 1 is first secured to a tripod and set to a desired level. Level Eye is then fitted to a member whose height is to be adjusted. By varying the level of the member until Level Eye receives the laser beam from EL - 1 in the optimum condition, the member can be set to the desired level. Moreover, it is unnecessary to move EL - 1 once it has been set even though there are places where the level has to be measured as the laser beam from EL - 1 is rotatably emitted in the horizontal direction. Since only Eye Level needs moving, one worker can perform the whole operation and this is advantageous.

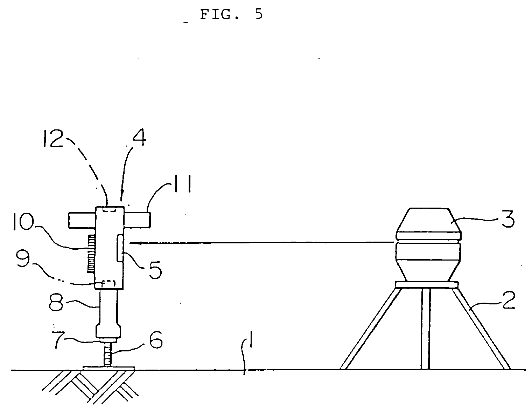

The present patent applicant has proposed in Japanese Patent Laid-Open No. 2213559 a strut height adjusting apparatus which is capable of making struts installed on a base material automatically uniform in height while utilising the previously noted automatic level control and of being operated by one person without his bending down. Referring to Fig. 5, a description will subsequently be given of this strut height adjusting apparatus, which comprises a laser beam emitter 3 fitted on to, for instance, a tripod 2 on a base material 1 and used to emit a laser beam rotatably in the horizontal direction at a hypothetical reference level and a strut height adjusting unit 4 which allows the adjustment of struts to make their lengths uniform on receiving the laser beam emitted from the laser beam emitter 3. The strut height adjusting unit 4 further comprises a rotary unit 8 for rotating a laser beam receiving unit 5 and a nut 7 on a bolt strut 6 for a floor panel, a motor 9 for driving the rotary unit 8, a control unit 10 for controlling the rotation of the motor 9 on receiving a signal from the laser beam receiving unit 5, a handle 11 for holding upright the strut height adjusting unit 4 and a level 12 as a guide to holding upright the strut height adjusting unit 4. The laser beam receiving unit 5 is formed with a plurality of semiconductor light receiving elements arranged longitudinally as position detecting elements. The laser beam receiving unit 5 generates a match signal when the position detecting element located in the centre receives the laser beam under the control of the control unit 10 and is adapted to raise a signal tone as the predetermined level becomes closer or to notify a difference in level by means of a bar mark to be displayed on a display unit. The control unit 8 processes the signal from the position detecting element so as to convert it into position data and controls the rotation of the motor 9 clockwise and counterclockwise according to the position data.

With this arrangement, the laser beam emitter 3 is placed at any given position of the base material 1 to set the hypothetical level by means of the laser beam, and the strut height adjusting unit 4 is set upright by fitting the rotary unit 8 of the strut height adjusting unit 4 onto the nut 7 of the bolt strut 6 while not only holding the handle 11 with the hands but also watching the level 12. When the position detecting element of the laser beam receiving unit 5 receives the laser beam, the control unit identifies which one of the position detecting elements has received the laser beam and rotates the motor 9 clockwise or counterclockwise according to the data on the difference in height between the hypothetical and actual levels. When the motor 9 rotates clockwise, the nut 7 ascends along the bolt strut 6 and when it rotates counterclockwise, the nut 7 descends. The rotation of the motor 9 results in moving the strut height adjusting unit 4 up and down as the nut 7 moves up and down, and the control unit 10 stops the motor 9 when it has sensed that the position detecting element in the centre has received the laser beam. When the motor 9 stops rotating, the nut 7 is anchored at the fixed position of the bolt strut 6. This process is applied to all the bolt struts 6 so that all the nuts 7 can be positioned in the same plane.

The aforementioned strut height adjusting apparatus is fit to arrange the positions of respective strut height adjusting members along one preset hypothetical level. Although the setting of the hypothetical level is normally based on the height of the floor at the doorway, the height of the floor tends to vary with the doorway when such a double-bottomed floor is constructed in a room having more than one doorway and this makes it necessary to measure the height of the floor at each doorway to obtain the mean value, for example, for the purpose of setting a hypothetical level. In consequence, measuring levels, staffs and the like will have to be employed individually to measure the height of each of them.

Although the aforementioned level of the strut height adjusting unit is designed to be checked for perpendicularity by the position of bubbles in hermetically sealed water level gauges. Such a device is too sensitive and slight jolting allows the bubble to move and if much attention is directed to the levelling operation, the fitting of the strut height adjusting unit to the strut may become neglected, thus decreasing work efficiency.

One object of the present invention is to provide a strut height adjusting apparatus which is designed to measure the height of a floor and the like more simply.

Another object of the present invention is to provide a strut height adjusting apparatus capable of facilitating the checking of perpendicularity of a strut by making it possible to check such perpendicularity by means of a warning sound or giving a display.

According to the present invention a strut height adjusting apparatus comprises a signal generating device for generating a level signal indicating a hypothetical level of height, characterised by a reception device for receiving said level signal from said generating device and generating an output signal indicating the difference between a reference position signal indicating a reference position and said level signal, said reception device being fitted in a hollow body, an adjusting device for adjusting a height adjusting member of said strut, one end of said adjusting device being connectable detachably to a height adjusting member, a control device for controlling the operation of said adjusting device in response to said output signal from said reception device so as to stop driving said adjusting device when said difference is nullified, said reception means having a marking unit for indicating a present position, said marking unit being vertically movably fitted in said hollow body, and a scale unit for indicating the position of said marking unit set adjacent to the leading end of said marking unit in said hollow body.

A strut height adjusting apparatus according to a preferred embodiment of the present invention has a hollow body further comprising level measuring means having a conductive pendulum which rocks as the hollow body inclines, a conductive annular member surrounding the pendulum, and warning means for notifying that the hollow body is inclined when the pendulum and the annular member contact and conduct.

With the scale marked with numerical measuring degrees from the centre thereof, for instance, the strut height adjusting unit is installed upright so as to abut the lower end of the adjusting means against the floor surface. The signal generating means is operated then to transmit a level signal to the reception means. The reception means is moved up or down so that the level signal from the signal generating means conforms to the zero point of the reception means. Whether or not the reception means has been so positioned as to receive the level signal at its zero point may easily be identified by checking the fact that the adjusting means has stopped to operate or the signal tone has changed as stated above. The height at the measuring spot can be measured by reading the numerical value on the scale as indicated by the marking unit. This operation is repeated on the floor surfaces close to the respective doorways to obtain the mean value of the measured results. The hypothecated level is thus set.

With the horizontal measuring means for detecting the inclination of the strut height adjusting unit, moreover, the warning means operates when it is inclined to notify that the hollow body has inclined as a buzzer or a lamp is actuated. Consequently, any person in charge may be able to devote himself to the work of examining the floor surface and adjusting the height of a strut solely by adjusting the inclination of the hollow body only when the warning means operates without monitoring the level as before.

An embodiment of the present invention will be now described in conjunction with the drawings in which:-

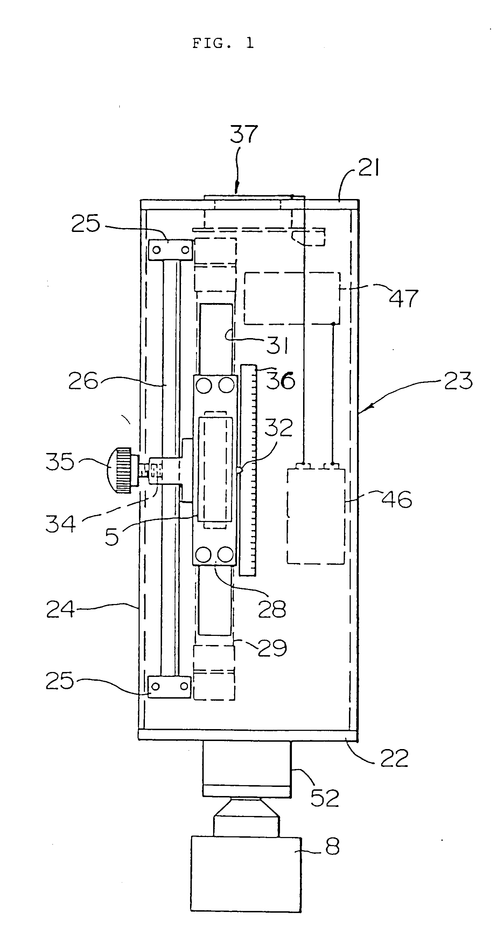

Fig. 1 is an elevation of an embodiment of the present invention.

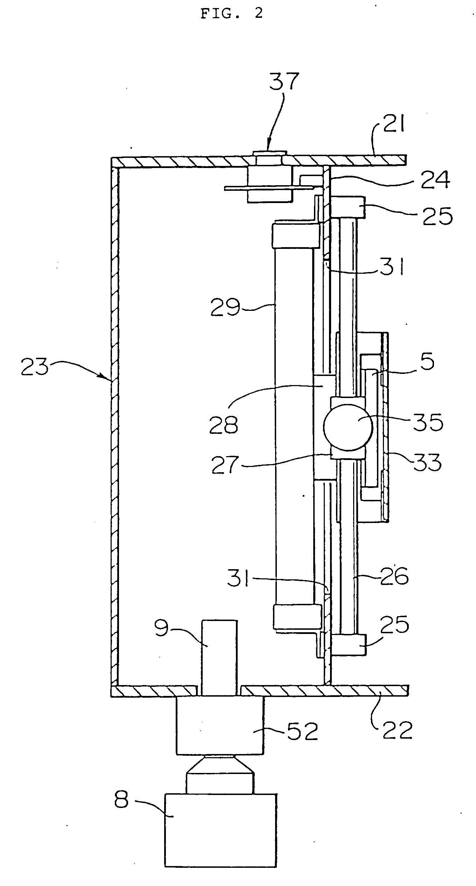

Fig. 2 is a side sectional view of Fig. 1.

Fig.3 is a partially elevational sectional view of Fig. 1.

Fig.4 is a schematic diagram of a level measuring unit.

Fig. 5 is a diagram illustrating a conventional prior art strut height adjusting apparatus.

In the drawings like reference characters designate substantially like component parts.

A support rod 26 has upper and lower ends supported by respective support members 25 both fitted to a side plate 24 of a square cylindrical hollow body 23 with a predetermined spacing apart. An upper plate 21 closes the upper end of the hollow body 23 and a bottom plate 22 closes its lower end thereof. A block 27 is vertically movable on the support rod 26 and is integrally provided on the front side of a support base 28 which supports a light receiving unit 5 formed having a plurality of semiconductor light receiving elements or the like arranged longitudinally as position detecting elements. The rear portion of the support base 28 is vertically movable on a support member 29 provided on the underside of the side plate 24. A longitudinal hole 31 to allow the block 27 to move vertically is formed in the side plate 24. A pointer 32 is fitted to the side of the support base 28 at a position corresponding to the light receiving element positioned substantially in the centre of the vertical direction of the light receiving unit 5. The front of the light receiving unit 5 is protected by transparent glass or a protective plastic member 33. A threaded hole 34 to the support rod 26 is formed in the block 27 and a fixing bolt 35 is fitted in the threaded hole 34. When the fixing bolt 35 is loosened, the support base 28 is vertically movable and when it is tightened, the support base 28 is fixed in position. A scale plate member 36 which is vertically long is fitted to the side plate 24 in such a way as to overlap the leading end of the pointer 32 and a scale plate member 36, which is graduated at equal intervals.

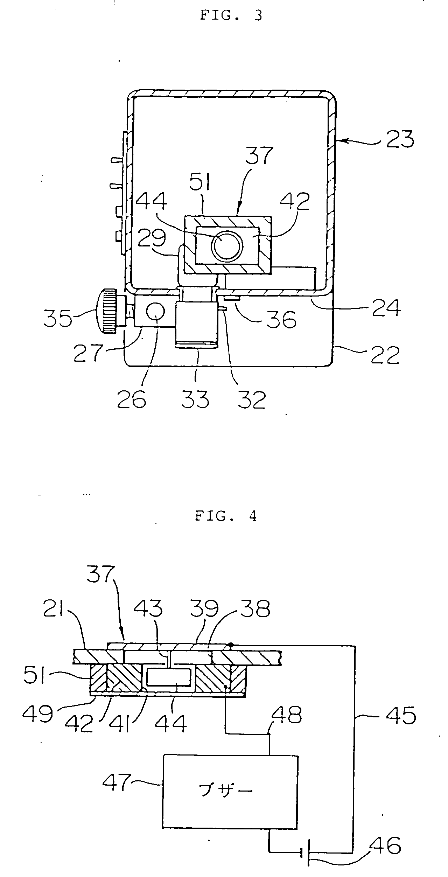

A level measuring means 37 is fitted to the upper plate 21. As shown in Figs. 3 and 4 in detail, the level measuring means 37 comprises a conducting pendulum comprising a conductive cover 39 fitted so as to cover an opening 38 formed in the upper plate 21. A round hole 41 is formed in the centre of the upper plate 21 and an outer peripheral member 42 is fitted to the upper plate 21 in such a way that the round hole 41 is positioned beneath the opening 38. A conductive moving member 44 is suspended by a conductor 43 from the cover 39 and loosely fitted in the round hole 41 of the outer peripheral member 42. The cover 39 is connected via a connecting wire 45 to a power supply cell 46. A connecting wire 48 connects the power supply cell 46 via a buzzer 47 and a nonconductive lower plate member 49 to the outer peripheral member 42. Consequently, the buzzer 47 operates when the moving member 44 sways to the extent that it contacts the outer peripheral member 42. Numeral 51 denotes a protective cover.

A motor 9 is fitted to the bottom plate 22 and the upper end of the rotary unit 8 is fitted to the drive shaft (not shown) of the motor 9. The rotary unit 8 is rotatably supported by a bearing 52 on the bottom plate 22 and a hole (not shown) for receiving the nut 7 of a bolt strut 6 for a floor panel is formed in the lower edge face. The construction of the portion described above is similar to the rotary unit disclosed in Japanese Patent Laid-Open No. 2213559.

The graduations on the scale plate member 36 are so arranged as to indicate the height of the rotary unit 8 from its lowermost edge face.

With this arrangement, when the height of a floor near a doorway is measured, there should follow the steps of installing a strut adjusting apparatus upright while abutting the lower edge face of the rotary unit 8 against the floor surface and making the light receiving unit 5 receive the laser beam from the laser beam emitter 3 installed in a given position on the base material 1. When the position of the light receiving unit 5 that has received the laser beam shifts from the position of the pointer 32, the fixing bolt 35 is loosened to move the support base 28 vertically up or down in order that one of the light receiving elements of the light receiving unit 5 receives the laser beam, that one of the light receiving element conforming in position to the pointer 32. When the position of the light receiving element involved conforms to the intended position, the fixing bolt 35 is tightened again to fix the support base 28, so that the graduation on the scale plate member 36 as indicated by the pointer 32 may be read. It may be visually observed whether or not the light receiving element conforming to the position of the pointer 32 has received the laser beam. On the other hand, the rotary unit 8 which functions to stop the rotation of the nut 7 of the bolt strut 6 for a floor panel when it reaches a predetermined level may be utilised to confirm whether or not the light receiving element conforming to the position of the pointer 32 has received the laser beam or otherwise the variation of the signal tone caused by the control unit 8 or the bar mark in the display unit may be used to confirm easily the effect as stated above.

The operation previously noted is performed in every doorway to obtain the mean value and this value may be used to set a hypothetical level in consideration of the height of the floor at the doorways involved. If the strut height adjusting apparatus is inclined at the time the measurement is to be made, the moving member 44 of the level measuring means 37 rocks and comes in contact with the outer peripheral member 42, thus causing the buzzer 47 to operate, whereby the buzzer sound informs the operator of the inclination of the strut height adjusting apparatus. Since the setting of the angle at which the buzzer 47 operates can be determined by the width of the gap between the moving member 44 and the outer peripheral member 42, the determination of the width thereof may be based on the allowable angle of inclination of the bolt strut 6 for a floor panel.

By effecting a simple improvement in the apparatus disclosed in Japanese Patent Laid-Open No. 2213559, one strut height adjusting apparatus is usable for not only setting the level of the bolt strut 6 for a floor panel but also measuring the height of the floor. Since the inclination of the strut height adjusting apparatus is made known by the buzzer sound, it is possible to measure the height of a floor and to set the level of the bolt strut 6 for a floor panel with efficiency.

Although the sound of the buzzer 47 is used to notify inclination of the strut height adjusting apparatus in the embodiment shown, a lamp may be employed to warn such inclination. Since the aforementioned light receiving unit 5 of Japanese Patent Laid-Open No. 2213559 is designed to issue a match signal when the position detecting element located in the centre receives the laser beam or to boost the signal tone as the predetermined level is attained or to inform the level difference by means of a bar mark to be displayed on a display unit, the adjustment of the vertical movement of the light receiving unit 5 may be made by utilising the variation of the signal tone or the bar mark.

Although the construction of a double-bottomed floor has been referred to in the embodiment shown by way of example, the application of the strut height adjusting apparatus is not limited to such floor panels but to control over the levels of height of beams, posts and the like. The present strut height adjusting apparatus may also have a wide range of uses as a means of measuring the height of floors in addition to those of uniformly arranging the height of struts in the fields of civil engineering, construction and the like.

As set forth above, the strut height adjusting apparatus comprises a reception means vertically movably fitted to the hollow body and the marking unit for displaying a present position, the hollow body having the scale unit for displaying the position of the marking unit in such a way that the scale unit is adjacent to the leading end of the marking unit. The strut height adjusting apparatus is set upright so that the lower end of the adjusting means abuts against the surface of a floor to be examined and the reception means is moved vertically to make its central portion receive a level signal from the signal generating means. The height of the floor can thus be measured by reading the gradation on the scale unit as then indicated by the marking unit. Whether or not the central portion of the reception means has received the level signal can easily be identified by confirming the fact that the adjusting means has stopped operating or by variation of the signal tone.

The provision of the level measuring means having the conductive pendulum, the conductive annular member so arranged as to surround the pendulum and the warning means for notifying that the hollow body is inclined when the pendulum and the annular member contact and conduct makes it possible to inform the operator that the hollow body has inclined since the warning means then operates to sound the buzzer or turn on the lamp. Moreover, the level need not always be monitored as before and the inclination of the hollow body should be corrected only when the warning means operates. As a result, the operator is allowed to devote himself to the work of not only examining floor surfaces but also adjusting the height of struts.

## Claims

1. A strut height adjusting apparatus comprising a signal generating device (3) for generating a level signal indicating a hypothetical level of height characterised by a reception device (5) for receiving said level signal from said generating device (3) and generating an output signal indicating the difference between a reference position signal indicating a reference position and said level signal, said reception device being fitted in a hollow body (23), an adjusting device for adjusting a height adjusting member of said strut, one end of said adjusting device being connectable detachably to a height adjusting member, a control device for controlling the operation of said adjusting device in response to said output signal from said reception device so as to stop driving said adjusting device when said difference is nullified, said reception device having a marking unit (32) for indicating a present position, said marking unit (32) being vertically movably fitted in said hollow body (23), and a scale unit (35) for indicating the position of said marking unit (32) set adjacent to the leading end of said marking unit in said hollow body (23).

2. A strut height adjusting apparatus as claimed in claim 1 characterised by a level measuring device (37) for detecting inclination of said hollow body (23) when said inclination of said hollow body (23) exceeds a predetermined level; and a warning device (47) for indicating the inclination of said hollow body (23) when said inclination of said hollow body (23) exceeds said predetermined level.

3. A strut height adjusting apparatus as claimed in claim 2, characterised in that said level measuring device has a conductive pendulum (39) which rocks in accordance with said inclination of said hollow body, a conductive annular member (42) surrounds said pendulum (3a), and the warning device (47) indicates inclination of said hollow body when said pendulum (3a) and said annular member (42) contact and conduct.

## Patentansprüche

1. Eine Stützenhöheneinstellungsvorrichtung mit einer Signalerzeugungsvorrichtung (3) zur Erzeugung eines Niveausignals, das ein hypothetisches Höhenniveau anzeigt, gekennzeichnet durch eine Empfangsvorrichtung (5), um das Niveausignal von der Erzeugungsvorrichtung (3) zu empfangen und ein Ausgangssignal zu erzeugen, welches den Unterschied zwischen einem Bezugspositionssignal, welches eine Bezugsposition anzeigt, und dem Niveausignal angibt, wobei die Empfangsvorrichtung in einen hohlen Körper (23) eingesetzt ist, eine Einstellungsvorrichtung zur Einstellung eines Höheneinstellungselements der Stütze, wobei ein Ende der Einstellungsvorrichtung lösbar mit einem Höheneinstellungselement verbindbar ist, eine Steuervorrichtung zur Steuerung des Betriebs der Einstellungsvorrichtung in Reaktion auf das Ausgangssignal von der Empfangsvorrichtung, um den Antrieb der Einstellungsvorrichtung zu unterbrechen, wenn der Unterschied auf Null abgeglichen ist, wobei die Empfangsvorrichtung eine Markierungsvorrichtung (32) hat, um eine aktuelle Position anzuzeigen, wobei die Markierungseinheit (32) in vertikaler Richtung bewegbar in den hohlen Körper (23) eingesetzt ist und eine Skaleneinheit (35) hat, um die Position der Markierungseinheit (32) neben dem führenden Ende der Markierungseinheit in dem hohlen Körper (23) anzuzeigen.

2. Eine Stützenhöheneinstellungsvorrichtung wie in Anspruch 1 beansprucht, gekennzeichnet durch eine Niveaumeßvorrichtung (37) zur Erfassung der Neigung des hohlen Körpers (23), wenn die Neigung des hohlen Körpers (23) ein vorgegebenes Maß überschreitet; und eine Warnvorrichtung (47) zur Anzeige der Neigung des hohlen Körpers (23), wenn die Neigung des hohlen Körpers (23) das vorgegebene Maß überschreitet.

3. Eine Stützenhöheneinstellungsvorrichtung wie in Anspruch 2 beansprucht, dadurch gekennzeichnet, daß die Niveaumeßvorrichtung ein leitendes Pendel (39) hat, welches entsprechend der Neigung des hohlen Körpers schwenkt, ein leitendes ringförmiges Element (42) das Pendel (3a) umgibt und die Warnvorrichtung (47) die Neigung des hohlen Körpers anzeigt, wenn das Pendel (3a) und das ringförmige Element (42) sich berühren und leiten.

## Revendications

1. Appareil d'ajustement de hauteur d'une jambe de suspension, comprenant un dispositif (3) générateur de signaux destiné à créer un signal de niveau indiquant un niveau hypothétique en hauteur, caracterisé par un dispositif (5) de réception du signal de niveau du dispositif générateur (3) et de création d'un signal de sortie représentatif de la différence entre un signal de position de référence indiquant une position de référence et le signal de niveau, le dispositif de réception étant monté dans un corps creux (23), un dispositif d'ajustement d'un organe d'ajustement en hauteur de la jambe de suspension, une première extrémité du dispositif d'ajustement pouvant être raccordée temporairement à un organe d'ajustement de hauteur, un dispositif de commande du fonctionnement du dispositif d'ajustement en fonction du signal de sortie du dispositif de réception de manière que l'entraînement du dispositif d'ajustement soit interrompu lorsque la différence est annulée, le dispositif de réception possédant une unité de marquage (32) destinée à indiquer une position actuelle, l'unité de marquage (32) étant montée sur le corps creux (23) afin qu'elle soit mobile verticalement, et une unité (35) possédant une échelle, destinée à indiquer la position de l'unité de marquage (32) et montée prés de l'extrémité avant de l'unité de marquage dans le corps creux (23).

2. Appareil d'ajustement de hauteur d'une jambe de suspension selon la revendication 1, caractérisé par un dispositif (37) de mesure de niveau destiné à détecter l'inclinaison du corps creux (23) lorsque l'inclinaison du corps creux (23) dépasse une valeur prédéterminée, et un dispositif d'avertissement (47) destiné à indiquer l'inclinaison du corps creux (23) lorsque cette inclinaison du corps creux (23) dépasse la valeur prédéterminée.

3. Appareil d'ajustement de hauteur d'une jambe de suspension selon la revendication 2, caractérisé en ce que le dispositif de mesure de niveau possède un pendule conducteur (39) qui pivote en fonction de l'inclinaison du corps creux, un organe annulaire conducteur (42) entoure le pendule (3a), et le dispositif d'avertissement (47) indique l'inclinaison du corps creux lorsque le pendule (3a) et l'organe annulaire (42) sont en contact et conduisent.
